# EUROPÄISCHE PATENTSCHRIFT

(11) **EP 0 820 394 B1**
(45) Veröffentlichungstag und Bekanntmachung des Hinweises auf die Patenterteilung: **04.08.1999**
(21) Anmeldenummer: 96907512.6
(22) Anmeldetag: 26.03.1996
(51) Int. Cl.: B60T 13/72, B60T 8/48

(54) **BREMSANLAGE FÜR KRAFTFAHRZEUGE**
BRAKING SYSTEM FOR MOTOR VEHICLES
DISPOSITIF DE FREINAGE POUR VEHICULE A MOTEUR

(30) Priorität: 19.04.1995 DE 19514382
(43) Veröffentlichungstag der Anmeldung: 28.01.1998
(73) Patentinhaber: Continental Teves AG & Co. oHG, 60488 Frankfurt (DE)
(72) Erfinder: ECKERT, Alfred, D-55294 Bodenheim (DE)
(86) Internationale Anmeldenummer: EP9601331
(87) Internationale Veröffentlichungsnummer: WO9633083

(56) Entgegenhaltungen:
- WO-A-93/24353
- WO-A-95/03196
- DE-A- 3 325 854

## Beschreibung

Die Erfindung betrifft eine Bremsanlage für Kraftfahrzeuge mit einer mittels eines Betätigungspedals betätigbaren Betätigungseinheit, die aus einem pneumatischen Bremskraftverstärker sowie einem Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem eine Regeldifferenz aus einem Soll-Bremsdruck und einem Ist-Bremsdruck zugeführt und von dessen einem Soll-Ankerweg entsprechender Ausgangsgröße ein einem Ist-Ankerweg entsprechendes Signal subtrahiert wird und wobei die so entstehende zweite Regeldifferenz einem die Position des Steuerventils beeinflussenden Lageregler zugeführt wird, dessen Ausgangsgröße einem dem Elektromagneten zuzuführenden elektrischen Strom entspricht.

Eine derartige Bremsanlage ist aus der internationalen Patentanmeldung WO 95/03196 bekannt. Der erwähnten Druckschrift sind jedoch keine konkreten Hinweise zu entnehmen, wie die darin beschriebene Bremsanlage zum Zweck einer betätigungskraftproportionalen Verzögerungsregelung verwendet werden könnte.

Durch die DE 33 25 854 C2 ist ein Bremsregler zum Regeln einer Fahrzeugbremsanlage bekannt geworden, der mit einem unabhängig vom Fahrerwillen vorzugsweise elektrisch ansteuerbaren Bremskraftverstärker zusammenwirkt. Die erwähnte elektrische Ansteuerung erfolgt mittels eines außerhalb des Bremskraftverstärkers angeordneten Regelventils, das einen im Verstärkergehäuse einsteuerbaren pneumatischen Differenzdruck beeinflußt und dem Steuersignale einer Datenverarbeitungsanlage zugeführt werden, die als Eingangsgrößen Signale zweier Sensoranordnungen verarbeitet. Die erste Sensoranordnung besteht aus einem Geschwindigkeitssensor, dessen Signale differenziert werden, um die Fahrzeugverzögerung zu ermitteln. Die zweite Sensoranordnung wird durch einen Kraftsensor gebildet, der der Ermittlung der an einem Betätigungspedal wirkenden Betätigungskraft dient. Die zweite Sensoranordnung kann wahlweise durch eine dritte Sensoranordnung ersetzt werden, die die Ausgangskraft des Bremskraftverstärkers ermittelt, der ein in einem dem Bremskraftverstärker nachgeschalteten Hauptbremszylinder entstehender hydraulischer Druck bzw. Bremsdruck proportional ist. Die Datenverarbeitungsanlage enthält statische Kennlinien, aus denen Sollwerte der Verzögerung ermittelt werden.

Weniger vorteilhaft anzusehen sind bei dem vorbekannten Regler die bei schneller Fahrerbetätigung entstehenden Fehler in der Regelung, die durch die Verwendung der statischen Kennlinien verursacht werden und die dem natürlichen Sollverhalten der Bremsen nicht entsprechen.

Es ist daher Aufgabe der vorliegenden Erfindung, Maßnahmen vorzuschlagen, die bei der gattungsbildenden Bremsanlage ein einwandfreies Nachregeln sowohl langsamer, als auch schneller Betätigungsvorgäng ermöglichen. Außerdem soll die angestrebte Fahrzeugverzögerung unabhängig von Einflüssen schnell erreicht werden, die zu einer Verringerung der Verzögerung führen, wie z. B. zusätzliche Beladung des Fahrzeuges, Anhängerbetrieb, Fading/Reibwertverlust oder Hangabtriebskraft bei Talfahrt.

Eine erste Lösung der der Erfindung zugrundeliegenden Aufgabe besteht darin, daß eine Einrichtung zum Erzeugen eines Signals vorgesehen ist, das eine am Betätigungspedal wirkende Betätigungskraft repräsentiert und das als Eingangsgröße einem Vorfilter zugeführt wird, das ein dynamisches Modell der Betätigungseinheit beinhaltet und dessen Ausgangsgröße dem Soll-Bremsdruck entspricht, und daß ein Druckbeobachter vorgesehen ist, dem als Eingangsgröße ein die Fahrzeuggeschwindigkeit repräsentierendes Signal zugeführt wird, der ein dynamisches Modell der an die Betätigungseinheit angeschlossenen Teile der Bremsanlage sowie des Fahrzeugverhaltens enthält und dessen Ausgangsgröße einen geschätzten Ist-Bremsdruckwert darstellt, der zur Bildung der Regeldifferenz von dem Soll-Bremsdruck subtrahiert wird.

Vorteilhafte Weiterbildungen der ersten Lösung sind in den Unteransprüchen 2 bis 5 angegeben.

Nach einer zweiten Lösung der vorhin gestellten Aufgabe sind eine Einrichtung zum Erzeugen eines Signals, das eine am Betätigungspedal wirkende Betätigungskraft repräsentiert, sowie ein Kraftbeobachter vorgesehen, dem als Eingangsgröße ein die Fahrzeuggeschwindigkeit repräsentierendes Signal zugeführt wird, der ein dynamisches Modell der Bremsanlage einschließlich der Betätigungseinheit sowie des Fahrzeugverhaltens enthält und dessen Ausgangsgröße eine geschätzte Ist-Betätigungskraft darstellt, die zur Bildung der einem um das dynamische Modell der Betätigungseinheit erweiterten Druckregler zuzuführenden Regeldifferenz von dem die Betätigungskraft repräsentierenden Signal subtrahiert wird.

Vorteilhafte Weiterbildungen der zweiten Lösung sind den Unteransprüchen 7 bis 9 zu entnehmen.

Eine dritte Lösung der der Erfindung zugrundeliegenden Aufgabe sieht eine Einrichtung zum Erzeugen eines Signals vor, das eine am Betätigungspedal wirkende Betätigungskraft repräsentiert und das als Eingangsgröße einer dem Bremsdruckregler vorgeschalteten Regelstruktur zugeführt wird, deren zweite Eingangsgröße durch ein die Fahrzeuggeschwindigkeit repräsentierendes Signal gebildet wird und deren Ausgangsgröße dem Soll-Bremsdruck entspricht.

Vorteilhafte Weiterbildungen der dritten Lösung sind in den Unteransprüchen 11 und 12 aufgeführt.

Eine vierte Lösung der Aufgabe besteht schließlich darin, daß eine Einrichtung zum Erzeugen eines Signals vorgesehen ist, das eine am Betätigungspedal wirkende Betätigungskraft repräsentiert und als Eingangsgröße einer dem Lageregler vorgeschalteten Regelstruktur zugeführt wird, deren zweite Eingangsgröße durch ein die Fahrzeuggeschwindigkeit repräsentierendes Signal gebildet wird und deren Ausgangsgröße dem Soll-Ankerweg entspricht.

Vorteilhafte Weiterbildungen der vierten Lösung sind aus den Unteransprüchen 14 bis 16 ersichtlich.

Weitere Einzelheiten, Merkmale und Vorteile der Erfindung gehen aus der nachfolgenden Beschreibung von vier Ausführungsbeispielen unter Bezugnahme auf die beiliegende Zeichnung hervor, in der für einander entsprechende Einzelteile bzw. Funktionsblöcke gleiche Bezugszeichen verwendet werden.

In der Zeichnung zeigt:
- Fig. 1: eine erste Ausführung der erfindungsgemäßen Bremsanlage in schematischer Darstellung;

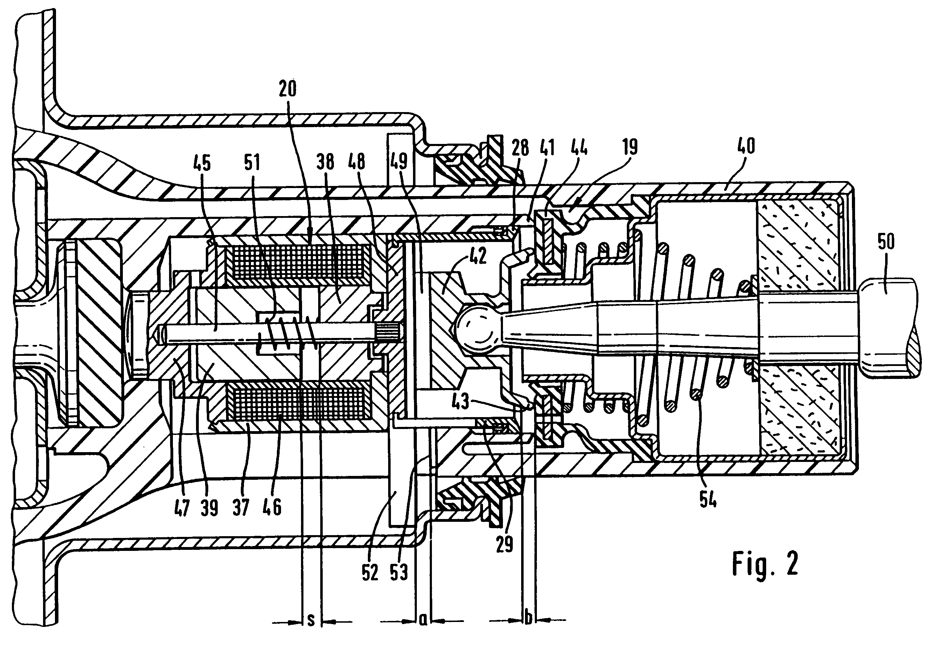

- Fig. 2: die Steuergruppe des pneumatischen Bremskraftverstärkers nach Fig. 1 im Axialschnitt, teilweise weggebrochen;
- Fig. 3: eine zweite Ausführung der erfindungsgemäßen Bremsanlage in schematischer Darstellung;
- Fig. 4: eine dritte Ausführung der erfindungsgemäßen Bremsanlage in schematischer Darstellung;
- Fig. 5: eine vierte Ausführung der erfindungsgemäßen Bremsanlage in schematischer Darstellung.

Das Soll-Bremsdrucksignal pₛₒₗₗ wird von einem Vorfilter 21 erzeugt, dem als Eingangsgröße das die Betätigungskraft repräsentierende Signal _{Fped} zugeführt wird und das ein dynamisches Modell der Betätigungseinheit 1 bzw. eine im allgemeinen nicht lineare Charakteristik pₛₒₗₗ als Funktion von F_{ped} enthält. Das Ist-Bremsdrucksignal pᵢₛₜ wird von einem Druckbeobachter 22 geliefert, dem als Eingangsgröße das die Fahrzeuggeschwindigkeit repräsentierende Signal v_{ref} zugeführt wird und der ein dynamisches Modell sämtlicher an die Betätigungseinheit 1 angeschlossenen Teile der Bremsanlage sowie des Fahrzeugverhaltens enthält. Die beiden Charakteristiken werden bei der konstruktiven Auslegung der Bremsanlage festgelegt, können aber auch Online mit der Zeit lernend nachgeführt werden, z. B. in Situationen, in denen die Regelung nicht aktiv ist. Um die Qualität des Regelungsprozesses zu erhöhen ist es sinnvoll, dem Druckbeobachter 22 als zweite Eingangsgröße ein Signal pₘₑₛₛ zuzuführen, das von einem den hydraulischen Druck im Hauptbremszylinder 3 erfassenden Drucksensor 26 geliefert wird. Alternativ kann dem Druckbeobachter 22 als zweite Eingangsgröße das Ausgangssignal Sₛₒₗₗ des Bremsdruckreglers 8 zugeführt werden, das der gewünschten einzustellenden Lage bzw. Position des Ankers des das Steuerventil 19 betätigen-den Elektromagneten 20 entspricht. Vom Soll-Ankerweg Sₛₒₗₗ wird in einem zweiten Summierer 25 ein am Steuerventil 19, beispielsweise mittels eines nicht gezeigten Wegsensors, ermittelbarer Steuerventilposition- bzw. Ist-Ankerweg Sᵢₛₜ subtrahiert und die so entstehende Regeldifferenz W wird einem unterlagerten zweiten Regler bzw. Steuerventil-Lageregler 18 zugeführt, dessen Stellgröße Y der Ansteuerung des Elektromagneten 20 dient. Das dem Ist-Ankerweg entsprechende Signal Sᵢₛₜ kann anstelle des Signals Sₛₒₗₗ als zweite Eingangsgröße dem Druckbeobachter 22 zur Verfügung gestellt werden.

Ein Regelvorgang kann vereinfacht folgendermaßen dargestellt werden:
- Der Fahrer betätigt das Bremspedal 4 mit einer bestimmten Betätigungskaft 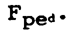
- Aus der Betätigung resultiert ohne Reglereinwirkung ein bestimmter Bremsdruck pₘₑₛₛ und eine bestimmte Fahrzeugverzögerung v_{ref}.
- Wird auf Grund z. B. nachlassender Reibwirkung der Bremsbeläge die Verzögerung kleiner, so resultiert dies bei konstantem Wert von pₘₑₛₛ und verlangsamtem Abfall von v_{ref} in einem kleineren, vom Druckbeobachter 22 geschätzten Wert pᵢₛₜ (durch Beobachterfehler).
- Einen Wert pᵢₛₜ, der kleiner ist als Pₛₒₗₗ, regelt die Regelstruktur durch entsprechende Fremdansteuerung des Bremskraftverstärkers 2 im Sinne einer Druckerhöhung solange aus, bis die Fahrzeugverzögerung im Verhältnis zum gemessenen erhöhten Bremsdruck dem im Druckbeobachter 22 abgelegten Modell entspricht.

Die Verzögerungsregelung arbeitet somit mittels Ausnutzung des Beobachterfehlers. Der beobachtete Bremsdruck pᵢₛₜ und der gemessene Bremsdruck pₘₑₛₛ sind nur so lange identisch, wie Modell und Wirklichkeit übereinstimmen. Ändert sich das Verhalten des Bremssystems, so wird sich diese Änderung in einem geänderten Beobachtersignal (Änderung des pᵢₛₜ) niederschlagen. Durch eine Veränderung der Beobachterrückführung ist es möglich, den Grad der Korrektur und somit die Art des Bremseneingriffs zu beeinflussen. Störungen der Meßsignale werden durch die Beobachtercharakteristik abgeschwächt.

Ein Vorteil dieser Ausführung liegt in der einfachen und durchgängigen Erstellung der Modelle, definiert durch den Konstruktionszustand des Fahrzeuges, und der einfachen und robusten Reglereinstellung (wenige Parameter). Auch werden Verzögerungen in der Regelstrecke durch entsprechende Modellformulierung implizit berücksichtigt und ausgeregelt.

Bei der Verwendung des den Soll-Ankerweg repräsentierenden Signals Sₛₒₗₗ anstelle der Meßgröße pₘₑₛₛ ergibt sich eine Auslegung des Druckbeobachters 22 quasi als Kalman-Filter durch Fehlen der Eingangsinformation. Der Druckbeobachter 22 enthält zusäztlich noch ein Modell der Fremdbetätigung des Bremskraftverstärkers 2, insbesondere dessen Steuerventils 20. Diese Ergänzung hat eine zusätzlich stabilisierende Wirkung auf das Gesamtregelsystem, ähnlich wie eine direkte Druckmessung. Die Wirkung ähnelt der eines D-Anteils im Regler, aber ohne schwierige Rauschprobleme.

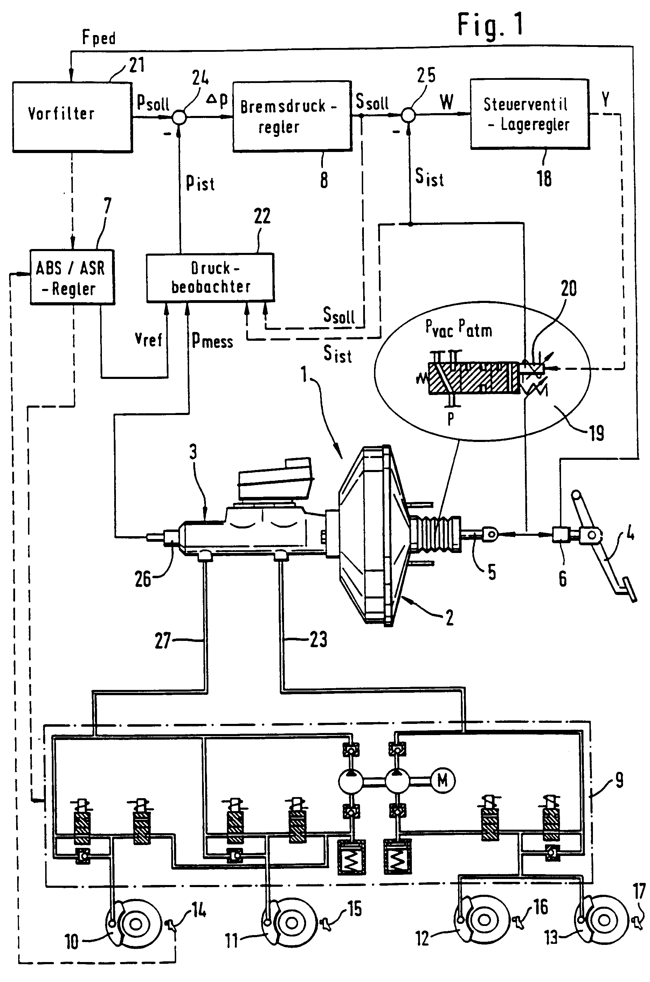

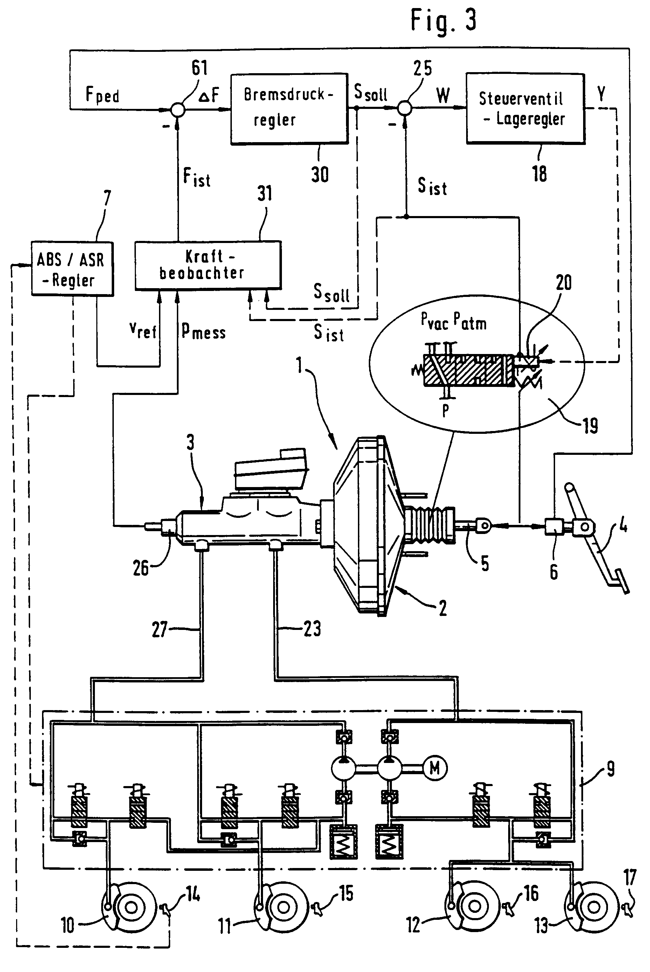

Bei der in Fig. 3 gezeigten Ausführung der erfindungsgemäßen Bremsanlage wird einem Bremsdruckregler 30, der gegenüber dem in Fig. 1 dargestellten Bremsdruckregler 8 um das dynamische Modell der Betätigungseinheit 1 erweitert worden ist, als Eingangsgröße eine in einem Summierer 61 gebildete Regeldifferenz ΔF zwischen der mittels des Kraftsensors 6 ermittelten Soll-Betätigungskraft F_{ped} und einer Ist-Betätigungskraft zugeführt. Das der Ist-Betätigungskraft entsprechende Signal Fᵢₛₜ wird von einem Kraftbeobachter 31 geliefert, dem als Eingangsgröße das vorhin erwähnte Fahrzeuggeschwindigkeitssignal v_{ref} zugeführt wird und der ein dynamisches Modell der gesamten Bremsanlage sowie des Fahrzeugverhaltens enthält. Um die Qualität des Regelungsprozesses zu erhöhen ist es sinnvoll, dem Kraftbeobachter 31 als zweite Eingangsgröße das vorhin erwähnte Druckmess-Signal pₘₑₛₛ zuzuführen. Alternativ kann dem Kraftbeobachter 31 als zweite Eingangsgröße das Ausgangssignal Sₛₒₗₗ des erweiterten Bremsdruckreglers 30 zugeführt werden, das der gewünschten einzustellenden Lage bzw. Position des Ankers des das Steuerventil 19 betätigenden Elektromagneten 20 entspricht. Anstelle des Ausgangssignals Sₛₒₗₗ des erweiterten Bremsdruckreglers 30 kann als zweite Eingangsgröße dem Kraftbeobachter 31 das dem Ist-Ankerweg entsprechende Signal Sᵢₛₜ zur Verfügung gestellt werden.

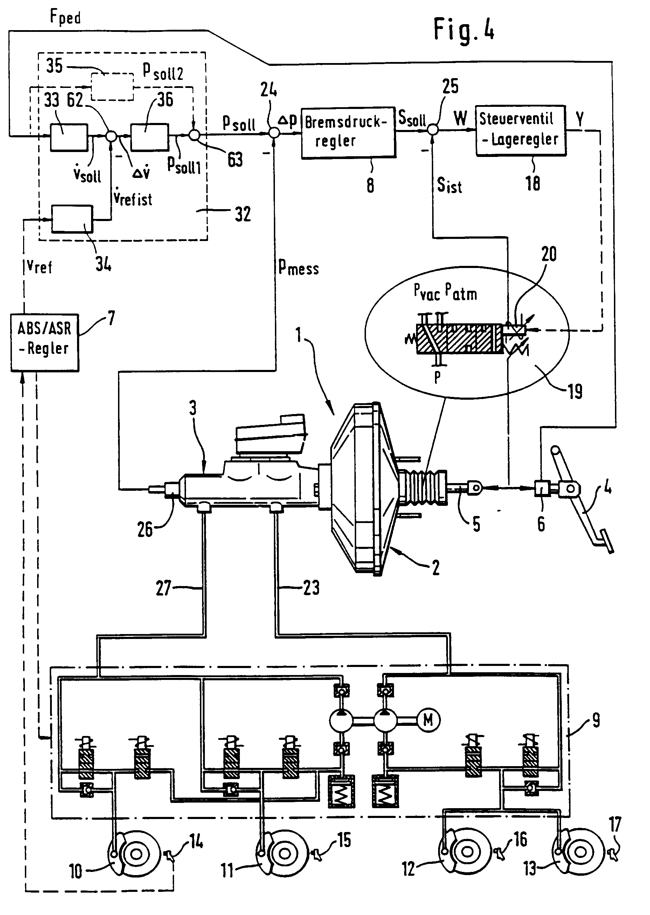

Bei der in Fig. 4 gezeigten Ausführung der Erfindung wird der vorhin erwähnte Soll-Bremsdruckwert pₛₒₗₗ in einer Regelstruktur 32 gebildet, der als Eingangsgrößen das Ausgangssignal F_{ped} des Kraftsensors 6 sowie das die Fahrzeuggeschwindigkeit repräsentierende Signal v_{ref} des ABS/ASR-Reglers 7 zugeführt werden. Die Regelstruktur 32 besteht dabei vorzugsweise aus einem Vorfilter 33, einem Differenzierer 34, einem zweiten Vorfilter 35 sowie einem Beschleunigungsregler 36. Das erste Vorfilter bzw. Beschleunigungsvorfilter 33 ordnet dem ihm zugeführten Betätigungskraftsignal F_{ped} einen Soll-Beschleunigungswert v̇ₛₒₗₗ zu, von dem in einem Summierer 62 das Ausgangssignal v̇_{refist} des Differenzierers 34 subtrahiert wird, das der Fahrzeug-Istbeschleunigung bzw. -verzögerung v̇_{refist} entspricht. Das Ergebnis der erwähnten Subtraktion Δv̇ wird als Eingangsgröße dem Beschleunigungsregler 36 zugeführt, dessen Ausgangsgröße pₛₒₗₗ₁ in einem weiteren Summierer 63 zur Ausgangsgröße pₛₒₗₗ₂ des zweiten bzw. Druckvorfilters 35 hinzuaddiert wird, wobei das Additionsergebnis den im Zusammenhang mit Fig. 1 erwähnten Soll-Bremsdruckwert pₛₒₗₗ darstellt. Der Aufbau des Druckvorfilters 35 ist mit dem des im Zusammenhang mit Fig. 1 erwähnten Vorfilters 21 identisch.

Ein Regelvorgang kann vereinfacht folgendermaßen beschrieben werden:
- Der Fahrer betätigt das Bremspedal 4 mit einer bestimmten Betätigungskaft F_{ped}.
- Aus der Betätigung resultiert ohne Reglereinwirkung ein bestimmter Bremsdruck und eine bestimmte Fahrzeugverzögerung.
- Die Differenz Δv̇ zwischen dem Ausgang des Beschleunigungsvorfilters 33 und der Ist-Verzögerung v̇_{refist} ist sehr klein und bewirkt kein Ausgangssignal des Becshleunigungsreglers 36. Hierdurch bleibt der zweite Drucksollwert pₛₒₗₗ₂ aus dem Druckvorfilter 35 unbeeinflußt. Da sich das Verhalten der Bremsanlage nicht geändert hat, stimmen Soll- und Ist-Bremsdruck überein.
- Wird auf Grund z. B. nachlassender Reibwirkung der Bremsbeläge die Verzögerung kleiner, so resultiert dies bei konstantem Wert von pₘₑₛₛ und verlangsamtem Abfall von vref in einem positiven Ausgangssignal des Beschleunigungsreglers 36 und damit in einer Erhöhung des Soll-Bremsdruckes pₛₒₗₗ.
- Einen Wert pₘₑₛₛ, der kleiner ist als pₛₒₗₗ, regelt die Regelstruktur durch entsprechende Fremdansteuerung des Bremskraftverstärkers 2 im Sinne einer Druckerhöhung solange aus, bis die Fahrzeugverzögerung im Verhältnis zum gemessenen erhöhten Bremsdruck dem Verzögerungs-Sollwert v̇ₛₒₗₗ entspricht.

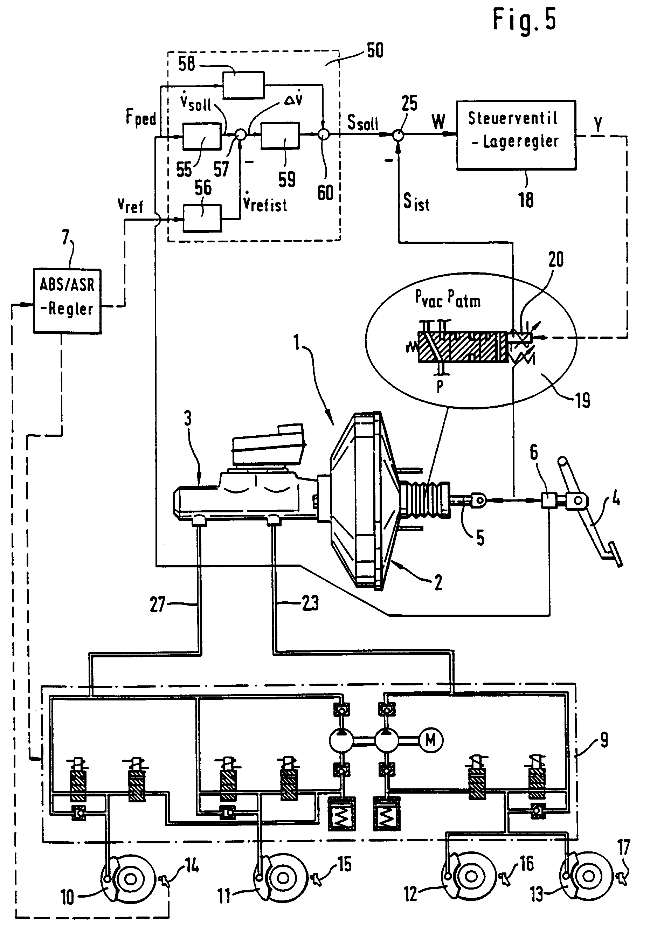

Fig. 5 zeigt schließlich eine dem im Zusammenhang mit Fig.1 erwähnten Steuerventil-Lageregler 18 vorgeschaltete Regelstruktur 50, der als Eingangsgrößen das Ausgangssignal F_{ped} des Kraftsensors 6 sowie das die Fahrzeuggeschwindigkeit repräsentierende Signal v_{ref} des ABS/ASR-Reglers 7 zugeführt werden. Die Regelstruktur 50 besteht dabei vorzugsweise aus einem Vorfilter 55, einem Differenzierer 56, einer Vorsteuerung 58 sowie einem Beschleunigungsregler 59. Das Vorfilter bzw. Beschleunigungsvorfilter 55 ordnet dem ihm zugeführten Betätigungskraftsignal F_{ped} einen Soll-Beschleunigungswert v̇ₛₒₗₗ zu, von dem in einem Summierer 57 das Ausgangssignal v̇_{refist} des Differenzierers 56 subtrahiert wird, das der Fahrzeug-Istbeschleunigung bzw. -verzögerung v̇_{refist} entspricht. Das Ergebnis der erwähnten Subtraktion Δv̇ wird als Eingangsgröße dem Beschleunigungsregler 59 zugeführt, dessen Ausgangsgröße pₛₒₗₗ₁ in einem weiteren Summierer 60 zur Ausgangsgröße pₛₒₗₗ₂ der Vorsteuerung 58 hinzuaddiert wird, wobei das Additionsergebnis den im Zusammenhang mit Fig. 1 erwähnten Soll-Ankerweg 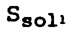 darstellt. In dieser Ausführung stellt die Vorsteuerung 58, die bei Bedarf zu- und abgeschaltet werden kann, eine Folgefunktion bei sich ändernden Betätigungskräften dar, d.h. eine Vorsteuerung des Steuerventils 19 des Bremskraftverstärkers 2 bezogen auf zeitliche Änderungen der Betätigungskräfte.

Es ist jedoch auch denkbar, die Vorsteuerung 58 wegzulassen. In diesem Fall muß der Beschleunigungsregler 59 die Funktion der Vorsteuerung 58 durch geeignete Sollpositionen nachbilden.

## Patentansprüche

1. Bremsanlage für Kraftfahrzeuge mit einer mittels eines Betätigungspedals betätigbaren Betätigungseinheit, die aus einem pneumatischen Bremskraftverstärker sowie einem Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem eine Regeldifferenz aus einem Soll-Bremsdruck und einem Ist-Bremsdruck zugeführt und von dessen einem Soll-Ankerweg entsprechender Ausgangsgröße ein einem Ist-Ankerweg entsprechendes Signal subtrahiert wird und wobei die so entstehende zweite Regeldifferenz einem die Position des Steuerventils beeinflussenden Lageregler zugeführt wird, dessen Ausgangsgröße einem dem Elektromagneten zuzuführenden elektrischen Strom entspricht, dadurch **gekennzeichnet**, daß eine Einrichtung (6) zum Erzeugen eines Signals (F_{ped}) vorgesehen ist, das eine am Betätigungspedal (4 ) wirkende Betätigungskraft repräsentiert und das als Eingangsgröße einem Vorfilter (21) zugeführt wird, das ein dynamisches Modell der Betätigungseinheit (1) enthält und dessen Ausgangsgröße (pₛₒₗₗ) dem Soll-Bremsdruck entspricht, und **daß** ein Druckbeobachter (22) vorgesehen ist, dem als Eingangsgröße ein die Fahrzeuggeschwindigkeit repräsentierendes Signal (v_{ref}) zugeführt wird, der ein dynamisches Modell der an die Betätigungseinheit (1) angeschlossenen Teile der Bremsanlage sowie des Fahrzeugverhaltens enthält und dessen Ausgangsgröße einen geschätzten Ist-Bremsdruckwert (pᵢₛₜ) darstellt, der zur Bildung der Regeldifferenz (Δp) von dem Soll-Bremsdruck subtrahiert wird.

2. Bremsanlage nach Anspruch 1 dadurch **gekennzeichnet**, daß dem Druckbeobachter (22) als zweite Eingangsgröße einSignal (pₘₑₛₛ) zugeführt wird, das dem in der Betätigungseinheit (1) eingesteuerten hydraulischen Druck entspricht.

3. Bremsanlage nach Anspruch 1 dadurch **gekennzeichnet**, daß dem Druckbeobachter (22) als zweite Eingangsgröße das den Soll- Ankerweg repräsentierende Signal (Sₛₒₗₗ) zugeführt wird.

4. Bremsanlage nach Anspruch 1 dadurch **gekennzeichnet**, daß dem Druckbeobachter (22) als zweite Eingangsgröße das den Ist-Ankerweg repräsentierende Signal (Sᵢₛₜ) zugeführt wird.

5. Bremsanlage nach Anspruch 3 oder 4 dadurch **gekennzeichnet**, daß der Druckbeobachter (22) zusätzlich ein Modell der vom Fahrerwillen unabhängigen Betätigung des Steuerventils (19) des Bremskraftverstärkers (2) enthält.

6. Bremsanlage für Kraftfahrzeuge mit einer mittels eines Betätigungspedals betätigbaren Betätigungseinheit, die aus einem pneumatischen Bremskraftverstärker sowie einem Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem eine Regeldifferenz aus einem Soll-Bremsdruck und einem Ist-Bremsdruck zugeführt und von dessen einem Soll-Ankerweg entsprechender Ausgangsgröße ein einem Ist-Ankerweg entsprechendes Signal subtrahiert wird und wobei die so entstehende zweite Regeldifferenz einem die Position des Steuerventils beeinflussenden Lageregler zugeführt wird, dessen Ausgangsgröße einem dem Elektromagneten zuzuführenden elektrischen Strom entspricht dadurch **gekennzeichnet**, daß eine Einrichtung (6) zum Erzeugen eines Signals (F_{ped}) vorgesehen ist, das eine am Betätigungspedal (4) wirkende Betätigungskraft repräsentiert und **daß** ein Kraftbeobachter (31) vorgesehen ist, dem als Eingangsgröße ein die Fahrzeuggeschwindigkeit repräsentierendes Signal (v_{ref}) zugeführt wird, der ein dynamisches Modell der Bremsanlage einschließlich der Betätigungseinheit (1) sowie des Fahrzeugverhaltens enthält und dessen Ausgangsgröße eine geschätzte Ist-Betätigungskraft (Fᵢₛₜ) darstellt, die zur Bildung der einem um das dynamische Modell der Betätigungseinheit (1) erweiterten Druckregler (29) zuzuführenden Regeldifferenz (ΔF) von dem die Betätigungskraft repräsentierenden Signal (F_{ped}) subtrahiert wird.

7. Bremsanlage nach Anspruch 6 dadurch **gekennzeichnet**, daß dem Kraftbeobachter (31) als zweite Eingangsgröße ein Signal (pₘₑₛₛ) zugeführt wird, das dem in der Betätigungseinheit (1) eingesteuerten hydraulischen Druck entspricht.

8. Bremsanlage nach Anspruch 6 dadurch **gekennzeichnet**, daß dem Kraftbeobachter (31) als zweite Eingangsgröße das den Soll-Ankerweg repräsentierende Signal (Sₛₒₗₗ) zugeführt wird.

9. Bremsanlage nach Anspruch 6 dadurch **gekennzeichnet**, daß dem Kraftbeobachter (31) als zweite Eingangsgröße das den Ist-Ankerweg repräsentierende Signal (Sᵢₛₜ) zugeführt wird.

10. Bremsanlage für Kraftfahrzeuge mit einer mittels eines Betätigungspedals betätigbaren Betätigungseinheit, die aus einem pneumatischen Bremskraftverstärker sowie einem Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem eine Regeldifferenz aus einem Soll-Bremsdruck und einem Ist-Bremsdruck zugeführt und von dessen einem Soll-Ankerweg entsprechender Ausgangsgröße ein einem Ist-Ankerweg entsprechendes Signal subtrahiert wird und wobei die so entstehende zweite Regeldifferenz einem die Position des Steuerventils beeinflussenden Lageregler zugeführt wird,
dessen Ausgangsgröße einem dem Elektromagneten zuzuführenden elektrischen Strom entspricht dadurch **gekennzeichnet**, daß eine Einrichtung (6) zum Erzeugen eines Signals (F_{ped}) vorgesehen ist, das eine am Betätigungspedal (4) wirkende Betätigungskraft repräsentiert und als Eingangsgröße einer dem Bremsdruckregler (8) vorgeschalteten Regelstruktur (32) zugeführt wird, deren zweite Eingangsgröße durch ein die Fahrzeuggeschwindigkeit repräsentierendes Signal (v_{ref}) gebildet wird und deren Ausgangsgröße dem Soll-Bremsdruck (pₛₒₗₗ) entspricht.

11. Bremsanlage nach Anspruch 10 dadurch **gekennzeichnet**, daß die Regelstruktur (32) aus einem Vorfilter (33), das dem Signal (F_{ped}) einen Soll-Beschleunigungswert (v̇ₛₒₗₗ) zuordnet, einem Differenzierer (34) zur zeitlich differenzierenden Verarbeitung des die Fahrzeuggeschwindigkeit repräsentierenden Signals (v_{ref}), dessen Ausgangsgröße von der Ausgangsgröße des Vorfilters (33) zur Bildung einer Regeldifferenz (Δv̇ₛₒₗₗ) subtrahiert wird, die einem dem Bremsdruckregler (8) vorgeschalteten Beschleunigungsregler (36) zugeführt wird, dessen Ausgangsgröße dem dem Bremsdruckregler (8) zuzuführenden Soll-Bremsdruck (pₛₒₗₗ) entspricht.

12. Bremsanlage nach Anspruch 11 dadurch **gekennzeichnet**, daß die Ausgangsgröße (pₛₒₗₗ₁) des Beschleunigungsreglers (36) zu der Ausgangsgröße (pₛₒₗ₁₂) eines zweiten Vorfilters (35) hinzuaddiert wird, das ein dynamisches Modell der Betätigungseinheit (1) enthält und dem als Eingangsgröße das die Betätigungskraft repräsentierende Signal (F_{ped}) zugeführt wird, wobei das Additionsergebnis dem dem Bremsdruckregler (8) zuzuführenden soll-Bremsdruck (pₛₒₗₗ) entspricht.

13. Bremsanlage für Kraftfahrzeuge mit einer mittels eines Betätigungspedals betätigbaren Betätigungseinheit, die aus einem pneumatischen Bremskraftverstärker sowie einem Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Lageregler, dem eine Regeldifferenz aus einem Soll-Ankerweg und einem Ist-Ankerweg zugeführt wird, und dessen Ausgangsgröße einem dem Elektromagneten zuzuführenden elektrischen Strom entspricht, dadurch **gekennzeichnet**, daß eine Einrichtung (6) zum Erzeugen eines Signals (F_{ped}) vorgesehen ist, das eine am Betätigungspedal (4) wirkende Betätigungskraft repräsentiert und das als Eingangsgröße einer dem Lageregler (18) vorgeschalteten Regelstruktur (50) zugeführt wird, deren zweite Eingangsgröße durch ein die Fahrzeuggeschwindigkeit repräsentierendes Signal (v_{ref}) gebildet wird und deren Ausgangsgröße dem Soll-Ankerweg (Sₛₒₗₗ) entspricht.

14. Bremsanlage nach Anspruch 13 dadurch **gekennzeichnet**, daß die Regelstruktur (50) ein Vorfilter (55), das dem Signal (F_{ped}) einen Soll-Beschleunigungswert (v̇ₛₒₗₗ) zuordnet, sowie einen Differenzierer (56) zur zeitlich differenzierenden Verarbeitung des die Fahrzeuggeschwindigkeit repräsentierenden Signals (v_{ref}), aufweist, dessen Ausgangsgröße (v̇_{refist}) von der Ausgangsgröße des Vorfilters (55) zur Bildung einer Regeldifferenz (Δv̇) subtrahiert wird, die einem dem Lageregler (18) vorgeschalteten Beschleunigungsregler (59) zugeführt wird, dessen Ausgangsgröße dem Soll-Ankerweg (Sₛₒₗₗ) entspricht.

15. Bremsanlage nach Anspruch 14 dadurch **gekennzeichnet**, daß die Ausgangsgröße (Sₛₒₗₗ₁) des Beschleunigungsreglers (59) zu der Ausgangsgröße (Sₛₒₗₗ₂) einer Vorsteuerung (58) zur Bildung eines dem Soll-Ankerweg entsprechenden Signals (Sₛₒₗₗ) hinzuaddiert wird, die eine Folgefunktion bei sich zeitlich ändernden Betätigungskräften enthält, und der als Eingangsgröße das die Betätigungskraft repräsentierende Signal(F_{ped}) zugeführt wird.

16. Bremsanlage nach Anspruch 15 dadurch **gekennzeichnet**, daß die Vorsteuerung (42) abschaltbar ist.

## Claims

1. Brake system for motor vehicles using an actuation unit which can be actuated by an actuation pedal, which consists of a pneumatic brake booster and a master brake cylinder, to which the wheel brakes are connected, wherein the control valve of the brake booster can be controlled independently of the driver's will by means a solenoid, by means of whose armature one of the sealing seats of the control valve can be actuated, with a brake pressure controller, which is supplied with a control difference from a desired brake pressure and an actual brake pressure and from whose output variable, corresponding to a desired armature travel, a signal is subtracted, which corresponds to the actual armature travel, and wherein the second control difference thus generated is applied to a positioning controller which influences the position of the control valve, and the output variable of the positioning controller corresponds to the electrical current which is to be applied to the solenoid,
**characterized** in that a device (6) for the generation of a signal (F_{ped}) is provided, which represents an actuation force acting on the actuation pedal (4), and which is applied, as input variable, to a prefilter (21), which contains a dynamic model of the actuation unit (1) and whose output variable (pₛₒₗₗ) corresponds to the desired brake pressure, and in that a pressure monitor (22) is provided which receives, as input variable, a signal (v_{ref}) representing the vehicle speed, and which contains a dynamic model of the parts of the brake system connected to the actuation unit (1) and of the vehicle behavior, and whose output variable represents an estimated desired brake pressure value (pᵢₛₜ), which is subtracted from the desired brake pressure for the formation of the control difference (Δp).

2. Brake system according to Claim 1,
**characterized** in that the pressure monitor (22) receives, as a second input variable, a signal (pₘₑₛₛ) which corresponds to the hydraulic pressure used for the control of the actuation unit (1).

3. Brake system according to Claim 1,
**characterized** in that the pressure monitor (22) receives, as a second input variable, a signal (Sₛₒₗₗ) representing the desired armature travel.

4. Brake system according to Claim 1,
**characterized** in that the pressure monitor (22) receives, as a second input variable, the signal (Sᵢₛₜ) representing the actual armature travel.

5. Brake system according to Claim 3 or 4,
**characterized** in that the pressure monitor (22) also contains a model of the actuation of the control valve (19) of the brake booster (2), which is independent of the driver's will.

6. Brake system for motor vehicles using an actuation unit which can be actuated by an actuation pedal, which consists of a pneumatic brake booster and a master brake cylinder, to which the wheel brakes are connected, wherein the control valve of the brake booster can be controlled independently of the driver's will by means of a solenoid, by means of whose armature one of the sealing seats of the control valve can be actuated, with a brake pressure controller, which is supplied with a control difference from a desired brake pressure and an actual brake pressure and from whose output variable, corresponding to a desired armature travel, a signal is subtracted, which corresponds to the actual armature travel, and wherein the second control difference thus generated is applied to a positioning controller which influences the position of the control valve, and the output variable of the positioning controller corresponds to the electrical current which is to be applied to the solenoid,
**characterized** in that a device (6) for the generation of a signal (F_{ped}) is provided, which represents an actuation force acting on the actuation pedal (4), and in that a force monitor (31) is provided which receives, as input variable, a signal (v_{ref}) representing the vehicle speed, and which contains a dynamic model of the brake system including the actuation unit (1) and of the vehicle behavior, and whose output variable represents an estimated actual actuation force (Fᵢₛₜ) which is subtracted, for the generation of a control difference (ΔF) which is applied to a pressure controller (29), that has been expanded by the addition of the dynamic model of the actuation unit (1), from the signal (F_{ped}) representing the actuation force.

7. Brake system according to Claim 6,
**characterized** in that the force monitor (31) receives, as a second input variable, a signal (pₘₑₛₛ) which corresponds to the hydraulic pressure used for the control of the actuation unit (1).

8. Brake system according to Claim 6,
**characterized** in that the force monitor (31) receives, as a second input variable, the signal (Sₛₒₗₗ) representing the desired armature travel.

9. Brake system according to Claim 6,
**characterized** in that the pressure monitor (31) receives, as a second input variable, the signal (Sᵢₛₜ) representing the actual armature travel.

10. Brake system for motor vehicles using an actuation
unit which can be actuated by an actuation pedal, which consists of a pneumatic brake booster and a master brake cylinder, to which the wheel brakes are connected, wherein the control valve of the brake booster can be controlled independently of the driver's will by means of a solenoid, by means of whose armature one of the sealing seats of the control valve can be actuated, with a brake pressure controller, which is supplied with a control difference from a desired brake pressure and an actual brake pressure and from whose output variable, corresponding to a desired armature travel, a signal is subtracted, which corresponds to the actual armature travel, and wherein the second control difference thus generated is applied to a positioning controller which influences the position of the control valve, and the output variable of the positioning controller corresponds tothe electrical current which is to be applied to the solenoid,
**characterized** in that a device (6) is provided for the generation of a signal (F_{ped}), which represents an actuation force acting on the actuation pedal (4) and which is applied, as input variable, to a control structure (32) that is connected upstream of the brake pressure controller (8), and whose second input variable is formed by a signal (v_{ref}) representing the vehicle speed and whose output variable corresponds to the desired brake pressure (pₛₒₗₗ).

11. Brake system according to Claim 10,
**characterized** in that the control structure (32) is applied, from a prefilter (33) which assigns a desired acceleration value (v̇ₛₒₗₗ) to the signal (F_{ped}) to a differentiation device (34) for differentiating with respect to time the signal (v_{ref}) which represents the vehicle speed, whose output variable is subtracted from the output variable of the prefilter (33) for the formation of a control difference (Δv̇ₛₒₗₗ), which is applied to an acceleration controller (36) that is connected upstream of the brake pressure controller (8), and whose output variable corresponds to the desired brake pressure (pₛₒₗₗ) which is to be applied to the brake pressure controller (8).

12. Brake system according to Claim 1,
**characterized** in that the output variable (pₛₒₗₗ₁) of the acceleration controller (36) is added to the output variable (pₛₒₗₗ₂) of a second prefilter (35), which contains a dynamic model of the actuation unit (1) and which receives, as input variable, the signal (F_{ped}) which represents the actuation force, wherein the addition result corresponds to the desired brake pressure (pₛₒₗₗ) which is to be applied to the brake pressure controller (8).

13. Brake system for motor vehicles using an actuation unit which can be actuated by an actuation pedal, which consists of a pneumatic brake booster and a master brake cylinder, to which the wheel brakes are connected, wherein the control valve of the brake booster can be controlled independently of the driver's will by means of a solenoid, by means of whose armature one of the sealing seats of the control valve can be actuated, with a positioning controller, which is supplied with a control difference from a desired brake pressure and an actual brake pressure and whose output variable corresponds to the electrical current which is to be applied to the solenoid,
**characterized** in that a device (6) for the generation of a signal (F_{ped}) is provided, which signal represents an actuation force acting on the actuation pedal (4) and which is applied, as input variable, to a control structure (50) which is connected before a positioning controller (18), and the second input variable of the control structure is formed by a signal (v_{ref}) representing the vehicle speed and the output variable corresponds to the desired armature travel (Sₛₒₗₗ).

14. Brake system according to Claim 13,
**characterized** in that control structure (50) includes a prefilter (55), which assigns a desired acceleration value (v̇ₛₒₗₗ) to the signal (F_{ped}), and a differentiation device (56) for differentiating with respect to time the signal (v_{ref}), whose output variable (v̇_{refist}) is subtracted from the output variable of the prefilter (55) for the formation of a control difference (Δv̇), which is applied to an acceleration controller (59) that is connected upstream of the positioning controller (18), and whose output variable corresponds to the desired armature travel (Sₛₒₗₗ).

15. Brake system according to Claim 14,
**characterized** in that the output variable (Sₛₒₗₗ₁) of the acceleration controller (59) is added to the output variable (Sₛₒₗₗ₂) of a preliminary control (58) for the formation of a signal (Sₛₒₗₗ) corresponding to the desired armature travel which contains a sequence function, with actuation forces which change over time, and which receives, as input variable, the signal (F_{ped}) representing the actuation force.

16. Brake system according to Claim 15,
**characterized** in that the preliminary control (42) can be switched off.

## Revendications

1. Système de freinage, pour véhicule automobile, comprenant une unité d'actionnement, pouvant être actionnée au moyen d'une pédale d'actionnement et constituée d'un amplificateur de force de freinage pneumatique et d'un maître-cylindre de frein auquel des freins de roue sont raccordés, la valve de commande de l'amplificateur de force de freinage pouvant être commandée indépendamment de la volonté du conducteur au moyen d'un électro-aimant, l'un des sièges d'étanchéité de la valve de commande pouvant être actionné à l'aide de l'armature mobile de l'électro-aimant, et un régulateur de pression de frein auquel une différence de régulation entre une pression de frein de consigne et une pression de frein réelle est envoyée, un signal correspondant à une course d'armature mobile réelle étant sous-trait d'une grandeur de sortie du régulateur de pression de frein qui correspond à une course d'armature mobile de consigne et la seconde différence de régulation ainsi existante étant envoyée à un régulateur de position qui influe sur la position de la valve de commande et dont une grandeur de sortie correspond à un courant électrique devant être fourni à l'électro-aimant, caractérisé en ce qu'il est prévu un dispositif (6) servant à produire un signal (F_{ped}) qui représente une force d'actionnement s'exerçant sur la pédale d'actionnement (4) et est envoyé, en tant que grandeur d'entrée, à un filtre préparatoire (21) qui contient un modèle dynamique de l'unité d'actionnement (1) et dont une grandeur de sortie (pₛₒₗₗ) correspond à la pression de frein de consigne, et en ce qu'il est prévu un observateur de pression (22) auquel un signal (v_{ref}) représentant la vitesse de véhicule est envoyé en tant que grandeur d'entrée, qui contient un modèle dynamique des parties du système de freinage raccordées à l'unité d'actionnement (1) et du comportement du véhicule, et dont une grandeur de sortie constitue une valeur de pression de frein réelle (pᵢₛₜ) estimée qui est soustraite de la pression de frein de consigne pour former la différence de régulation (Δp).

2. Système de freinage suivant la revendication 1, caractérisé en ce qu'un signal (pₘₑₛₛ) qui correspond à la pression hydraulique commandée dans l'unité d'actionnement (1) est envoyé à l'observateur de pression (22) en tant que seconde grandeur d'entrée.

3. Système de freinage suivant la revendication 1, caractérisé en ce que le signal (Sₛₒₗₗ) représentant la course d'armature mobile de consigne est envoyé à l'observateur de pression (22) en tant que seconde grandeur d'entrée.

4. Système de freinage suivant la revendication 1, caractérisé en ce que le signal (Sᵢₛₜ) représentant la course d'armature mobile réelle est envoyé à l'observateur de pression (22) en tant que seconde grandeur d'entrée.

5. Système de freinage suivant la revendication 3 ou 4, caractérisé en ce que l'observateur de pression (22) contient en outre un modèle de l'actionnement, indépendant de la volonté du conducteur, de la valve de commande (19) de l'amplificateur de force de freinage (2).

6. Système de freinage, pour véhicule automobile, comprenant une unité d'actionnement, pouvant être actionnée au moyen d'une pédale d'actionnement et constituée d'un amplificateur de force de freinage pneumatique et d'un maître-cylindre de frein auquel des freins de roue sont raccordés, la valve de commande de l'amplificateur de force de freinage pouvant être commandée indépendamment de la volonté du conducteur au moyen d'un électro-aimant, l'un des sièges d'étanchéité de la valve de commande pouvant être actionné à l'aide de l'armature mobile de l'électro-aimant, et un régulateur de pression de frein auquel une différence de régulation entre une pression de frein de consigne et une pression de frein réelle est envoyée, un signal correspondant à une course d'armature mobile réelle étant soustrait d'une grandeur de sortie du régulateur de pression de frein qui correspond à une course d'armature mobile de consigne et la seconde différence de régulation ainsi existante étant envoyée à un régulateur de position qui influe sur la position de la valve de commande et dont une grandeur de sortie correspond à un courant électrique devant être fourni à l'électro-aimant, caractérisé en ce qu'il est prévu un dispositif (6) servant à produire un signal (F_{ped}) qui représente une force d'actionnement s'exerçant sur la pédale d'actionnement (4) et en ce qu'il est prévu un observateur de force (31) auquel un signal (vref) représentant la vitesse de véhicule est envoyé en tant que grandeur d'entrée, qui contient un modèle dynamique du système de freinage, y compris de l'unité d'actionnement (1), et du comportement du véhicule, et dont une grandeur de sortie constitue une force d'actionnement réelle (Fᵢₛₜ) estimée qui est soustraite du signal (F_{ped}) représentant la force d'actionnement, pour former la différence de régulation (ΔF) devant être fournie à un régulateur de pression (29) élargi du modèle dynamique de l'unité d'actionnement (1).

7. Système de freinage suivant la revendication 6, caractérisé en ce qu'un signal (pₘₑₛₛ) qui correspond à la pression hydraulique commandée dans l'unité d'actionnement (1) est envoyé à l'observateur de force (31) en tant que seconde grandeur d'entrée.

8. Système de freinage suivant la revendication 6, caractérisé en ce que le signal (Sₛₒₗₗ) représentant la course d'armature mobile de consigne est envoyé à l'observateur de force (31) en tant que seconde grandeur d'entrée.

9. Système de freinage suivant la revendication 6, caractérisé en ce que le signal (Sᵢₛₜ) représentant la course d'armature mobile réelle est envoyé à l'observateur de force (31) en tant que seconde grandeur d'entrée.

10. Système de freinage, pour véhicule automobile, comprenant une unité d'actionnement, pouvant être actionnée au moyen d'une pédale d'actionnement et constituée d'un amplificateur de force de freinage pneumatique et d'un maître-cylindre de frein auquel des freins de roue sont raccordés, la valve de commande de l'amplificateur de force de freinage pouvant être commandée indépendamment de la volonté du conducteur au moyen d'un électro-aimant, l'un des sièges d'étanchéité de la valve de commande pouvant être actionné à l'aide de l'armature mobile de l'électro-aimant, et un régulateur de pression de frein auquel une différence de régulation entre une pression de frein de consigne et une pression de frein réelle est envoyée, un signal correspondant à une course d'armature mobile réelle étant soustrait d'une grandeur de sortie du régulateur de pression de frein qui correspond à une course d'armature mobile de consigne et la seconde différence de régulation ainsi existante étant envoyée à un régulateur de position qui influe sur la position de la valve de commande et dont une grandeur de sortie correspond à un courant électrique devant être fourni à l'électro-aimant, caractérisé en ce qu'il est prévu un dispositif (6) servant à produire un signal (F_{ped}) qui représente une force d'actionnement s'exerçant sur la pédale d'actionnement (4) et est envoyé, en tant que grandeur d'entrée, à une structure de régulation (32), disposée en amont du régulateur de pression de frein (8), dont une seconde grandeur d'entrée est formée par un signal (v_{ref}) représentant la vitesse de véhicule et dont une grandeur de sortie correspond à la pression de frein de consigne (pₛₒₗₗ).

11. Système de freinage suivant la revendication 10, caractérisé en ce que la structure de régulation (32) est constituée d'un filtre préparatoire (33), qui associe au signal (F_{ped}) une valeur d'accélération de consigne (v̇ₛₒₗₗ), d'un étage de dérivation (34) qui sert au traitement de dérivation par rapport au temps du signal (v_{ref}) représentant la vitesse de véhicule et dont une grandeur de sortie est soustraite de la grandeur de sortie du filtre préparatoire (33) pour former une différence de régulation (Δv̇ₛₒₗₗ) qui est envoyée à un régulateur d'accélération (36) qui est disposé en amont du régulateur de pression de frein (8) et dont une grandeur de sortie correspond à la pression de frein de consigne (pₛₒₗₗ) devant être fournie au régulateur de pression de frein (8).

12. Système de freinage suivant la revendication 11, caractérisé en ce que la grandeur de sortie (pₛₒₗₗ₁) du régulateur d'accélération (36) est ajoutée à la grandeur de sortie (pₛₒₗₗ₂) d'un second filtre préparatoire (35) qui contient un modèle dynamique de l'unité d'actionnement (1) et auquel le signal (F_{ped}) représentant la force d'actionnement est envoyé en tant que grandeur d'entrée, le résultat d'addition correspondant à la pression de frein de consigne (pₛₒₗₗ) devant être fournie au régulateur de pression de frein (8).

13. Système de freinage, pour véhicule automobile, comprenant une unité d'actionnement, pouvant être actionnée au moyen d'une pédale d'actionnement et constituée d'un amplificateur de force de freinage pneumatique et d'un maître-cylindre de frein auquel des freins de roue sont raccordés, la valve de commande de l'amplificateur de force de freinage pouvant être commandée indépendamment de la volonté du conducteur au moyen d'un électro-aimant, l'un des sièges d'étanchéité de la valve de commande pouvant être actionné à l'aide de l'armature mobile de l'électro-aimant, et un régulateur de position de frein auquel une différence de régulation entre une course d'armature mobile de consigne et une course d'armature mobile réelle est envoyée, un signal correspondant à une course d'armature mobile réelle étant soustrait d'une grandeur de sortie du régulateur de pression de frein qui correspond à une course d'armature mobile de consigne et la seconde différence de régulation ainsi existante étant envoyée à un régulateur de position qui influe sur la position de la valve de commande et dont une grandeur de sortie correspond à un courant électrique devant être fourni à l'électro-aimant, caractérisé en ce qu'il est prévu un dispositif (6) servant à produire un signal (F_{ped}) qui représente une force d'actionnement s'exerçant sur la pédale d'actionnement (4) et est envoyé, en tant que grandeur d'entrée, à une structure de régulation (50), disposée en amont du régulateur de position (18), dont une seconde grandeur d'entrée est formée par un signal (v_{ref}) représentant la vitesse de véhicule et dont une grandeur de sortie correspond à la course d'armature mobile de consigne (Sₛₒₗₗ).

14. Système de freinage suivant la revendication 13, caractérisé en ce que la structure de régulation (50) comprend un filtre préparatoire (55), qui associe au signal (F_{ped}) une valeur d'accélération de consigne (v̇ₛₒₗₗ), d'un étage de dérivation (56) qui sert au traitement de dérivation par rapport au temps du signal (v_{ref}) représentant la vitesse de véhicule et dont une grandeur de sortie (v̇_{refist}) est soustraite de la grandeur de sortie du filtre préparatoire (55) pour former une différence de régulation (Δv̇) qui est envoyée à un régulateur d'accélération (36) qui est disposé en amont du régulateur de position (18) et dont une grandeur de sortie correspond à la course d'armature mobile de consigne (Sₛₒₗₗ).

15. Système de freinage suivant la revendication 14, caractérisé en ce que la grandeur de sortie (Sₛₒₗₗ₁) du régulateur d'accélération (59) est ajoutée, pour former un signal (Sₛₒₗₗ) qui correspond à la course d'armature mobile de consigne, à la grandeur de sortie (Sₛₒₗₗ₂) d'une commande pilote (58) qui contient une fonction série dans le cas de forces d'actionnement variant dans le temps et à laquelle le signal (F_{ped}) représentant la force d'actionnement est envoyé en tant que grandeur d'entrée.

16. Système de freinage suivant la revendication 15, caractérisé en ce la commande pilote (42) peut être mise hors circuit.
